(19) **Europäisches Patentamt / European Patent Office / Office européen des brevets**

(11) **EP 4 409 225 B1**

(12) **EUROPEAN PATENT SPECIFICATION**

(45) Date of publication and mention
of the grant of the patent:
**05.11.2025 Bulletin 2025/45**

(21) Application number: **22793472.6**

(22) Date of filing: **22.09.2022**

(51) International Patent Classification (IPC):
**G01B 9/02015** *(2022.01)*    **G01B 9/02001** *(2022.01)*

(52) Cooperative Patent Classification (CPC):
**G01B 9/02028; G01B 9/0201**

(86) International application number:
**PCT/IL2022/051016**

(87) International publication number:
**WO 2023/053111 (06.04.2023 Gazette 2023/14)**

(54) **METHOD AND SYSTEM FOR MAPPING AND RANGE DETECTION**

VERFAHREN UND SYSTEM ZUR ABBILDUNG UND ENTFERNUNGSDETEKTION

PROCÉDÉ ET SYSTÈME DE CARTOGRAPHIE ET DE TÉLÉMÉTRIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.09.2021  IL 28682021**

(43) Date of publication of application:
**07.08.2024 Bulletin 2024/32**

(73) Proprietor: **Lidwave Ltd.**
**9777019 Jerusalem (IL)**

(72) Inventors:
• **HAI VIDAL, Yehuda**
**9515003 Jerusalem (IL)**
• **WEISS, Uri**
**9987800 Mevo Beitar (IL)**

(74) Representative: **Zacco GmbH**
**Bayerstrasse 83**
**80335 München (DE)**

(56) References cited:
**WO-A1- 01/42735          US-A1- 2020 359 903
US-A1- 2021 033 380**

• **FISCHER E ET AL: "Overcoming coherence
length limitation in two wavelength
interferometry - an experimental verification",
OPTICS COMMUNICATIONS, ELSEVIER,
AMSTERDAM, NL, vol. 123, no. 4, 1 February
1996 (1996-02-01), pages 465 - 472,
XP004005559, ISSN: 0030-4018, DOI: 10.1016/
0030-4018(95)00556-0**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNOLOGICAL FIELD

The present invention is generally in the field of distance measurements using electromagnetic (EM) signals reflected from a target object, *e.g.*, usable for 3D mapping and determining distance of objects in a field of view.

### BACKGROUND

Range detection of objects plays a key role in various applications ranging from navigation, security, mapping, biomedical applications, and more. The ability to provide accurate and sensitive range data is of high demand for development of autonomous vehicles, and other automated systems. Various range detection techniques utilize electromagnetic radiation in different wavelength ranges and respective properties of the radiation.

There are various well known range detection techniques utilizing electromagnetic (EM) waves. For example, Radar and Lidar systems enable detection of range of a target by utilizing the propagation speed of EM radiation to determine distance of target objects by determining time of travel of EM signals. Additional techniques, such as optical coherence tomography (OCT) exploit interference properties of EM radiation and variations in length of optical path.

US 2020/359,903 describes a coherence gated photoacoustic remote sensing system for imaging a subsurface structure in a sample with optical resolution may include an excitation beam source configured to generate an excitation beam that induces ultrasonic signals in the sample at an excitation location; an interrogation beam source configured to generate an interrogation beam incident on the sample at an interrogation location, a portion of the interrogation beam returning from the sample that is indicative of the generated ultrasonic signals, the interrogation beam being a low-coherent beam; an optical system that focuses the excitation beam onto the sample at an excitation location, and focuses the interrogation beam onto the sample at an interrogation location, at least the interrogation location being below the surface of and within the sample; and a low coherence interferometer that isolates a returning portion of the interrogation beam that corresponds to an interrogation event of the sample.

WO 2001/042,735 provides an optical mapping apparatus with adjustable depth resolution. The optical mapping apparatus can display transversal images in an object, particularly the eye. The apparatus can deliver two or more images with different depth resolutions, or a combination of these images, or only one image with adjustable depth resolution. There is also provided optical mapping apparatus with adjustable depth resolution, where OCT images are corrected for the curvature at the back of the eye lens.

Fischer et al, "Overcoming coherence length limitation in two wavelength interferometry - an experimental verification". Optics Communications Vol. 123, no. 4 (01-02-1996) 465-472: An experimental verification of the possibility of interferometric measurements at distances at which the optical path difference exceeds the coherence length of the laser source will be presented. A two-wavelength heterodyne interferometer setup using one diode laser source and an acousto-optic modulator for the generation of the second wavelength is described and measurements at a distance of 110 m are shown.

US 2021/033,380 Describes an interferometer system comprises a sample interferometer arm for guiding a first wave to a sample, and receiving a reflected wave from the sample and a phase amplifier for amplifying a phase shift of the reflected wave, to provide phase-shift-amplified intermediate wave. The interferometer system can also comprise an additional interferometer arm for guiding an additional wave to combine with the intermediate wave, to provide an output wave, and a detector for detecting the output wave.

### GENERAL DESCRIPTION

The conventional range detection techniques, including techniques such as Time of Flight (TOF) and Frequency Modulated Continuous Wave (FMCW), generally determine range directly or indirectly using time delay and speed of light. These techniques typically require fast (within the gigahertz regime) and sensitive hardware. As a result, lowering costs typically reduce the detection range and/or sensitivity of these detection systems.

There is thus a need in the art for a novel range detection technique configured to provide data on distance from a range detection system to one or more target objects. The technique of the present invention may be implemented using relatively low-cost hardware and electronics while is capable of accurate distance measurement. Further, range and distance detection according to the present technique is generally independent of time related measurements and utilizes coherence properties of EM radiation for determining range to one or more selected objects.

More specifically, the present technique utilizes variation in coherence of EM signals, and a relation between the range to a target and the coherence length of the EM signal directed thereto. This relation is measurable using variation in contrast of interference (between maximal intensity and minimal intensity) and/or variation in amplitude at peak frequency of collected signal. The variation in coherence between the EM signals is described herein below and is generally associated with a relation (typically a ratio) between the coherence length and the distance passed by the signals.

Generally, the contrast between constructive interference peak and destructive interference low is associated with level of coherence of the mixed/interfering beam portions. Accordingly, reduced contrast between the peak and low of the interfering signal indicates lower coherence between the beams. In analyzing temporal spectrum of the collected interfering signal, coherence between the mixed/interfering beam portions is determined based on relative power/energy between peak frequency of the collected signal.

More specifically, in some configurations, the detector unit is operable for sampling the interfering signals at a selected sampling rate, providing a sequence of sampled signals. The sequences may be transformed to frequency domain, e.g., using Fourier transform. In the frequency domain, certain frequency shows peak variation, defined as peak frequency. The peak frequency may be at zero frequency (indicating minimal changes between sampling instances), certain frequency determined by phase modulation frequency of the phase modulator as described herein, or a different frequency that may indicate closing speed of the target object in accordance with Doppler Shift. The present technique may utilize relation between amplitude of peak frequency as detected by the first and second detectors, associated with first and second interference signals having different coherence properties (e.g., coherence length), to determine the coherence term $\Gamma$ (Gamma) as described herein below, and according to determine distance to the target object.

It should be noted that coherence variation may be associated with reducing coherence length or increasing the coherence length. It should further be noted that where the present disclosure described the use of noise generator for variation of coherence length, the effect on coherence length may be by reducing and/or increasing. Further such noise generator should be understood broadly as relating to phase modulator, noise generator, optical amplifier, spectral filtering, or any other technique that can be used to vary coherence length of emitted radiation beam.

According to the technique, an EM source emits a beam of EM radiation of a selected wavelength range, the emitted beam is split into two or more portions, where one or more reference beams are directed along corresponding one or more reference arms, and one or more interrogating beams are directed toward the target object(s). Generally, the present technique utilizes plurality of either the interrogating or the reference beams, i.e., two or more reference beams and an interrogating beam, or two or more interrogating beams and a reference beam. Beam portions reflected from the target object(s) are collected and mixed/combined with selected reference beams, and the mixed/interference signals are measured. Thus, the detected signal related to interference between the collected beam portion after being reflected from the object, and the reference beam portion, and is generally indicative of relative phase variations between them. Relative delay or variation in length of path between the beam portions generally reduces coherence therebetween, affecting contrast of interference pattern (or frequency of the pattern) Accordingly, the present technique utilizes decrease/increase in coherence between signal portions, thereby causing variation (e.g., decrease) in contrast on the interference between them. The decrease in relative coherence between signal portions (interrogating and reference beams) may result in decrease in contrast between interference fringes. In this connection, the measured signal (for the exemplary case of Lorentzian beam spectrum) is described by equation 1:

$$\mathrm{I_{det}} = \frac{1}{4}\left[\mathrm{I_1} + \mathrm{I_2} + 2 \cdot \sqrt{\mathrm{I_1 I_2}} \cdot \cos(\varphi)\, e^{-\frac{\mathrm{r}}{lc}}\right] \qquad \text{(Equation 1)}$$

where $I_{det}$ is the measured mixed signal (integrated over a collection time), $I_1$ and $I_2$ are the collected reflection of the interrogating beam and the reference beam respectively, $l_c$ is the coherence length of the EM beam, r is the optical path difference, or difference between the distance traveled by the interrogating beam and the reference beam being indicative of range to a target object, and $\varphi$ is a phase difference between the $I_1$ and $I_2$ beams. As described in more detail below, the present technique utilizes detection of the mixed signal while eliminating variation associated with phase difference $\varphi$ between the $I_1$ and $I_2$ beams, to provide detection of relative coherence between the beams

In this connection it should be noted that coherence is a property of an EM signal, relating to propagation distance of the signal, over which the wave maintains a specified degree of coherence. The coherence length of an EM signal typically behaves as a function of signal bandwidth and is proportional to $\lambda^2/(n\Delta\lambda)$. It should also be noted that the above equation 1 relates to Lorentzian beam spectrum. Reduction of interference contrast in accordance with coherence length is however typical for various beam spectra. For example, for Gaussian shaped beam spectrum, the interference contrast reduces exponentially by $e^{\frac{-r^2}{lc^2}}$ . For simplicity of the description, the present technique is described herein assuming Lorentzian beam spectrum, it should however be noted that the present technique may be operated with various other spectral shapes of the beam.

Obtaining the distance to the object based on equation 1 using a single measurement is limited due to unknown data on reflectivity of the target, efficiency in collection of reflected light, etc. The present technique utilizes two or more measurements as described below to enable cancelation of such unknowns for determining distance to the target.

Further, it should also be noted that the present technique utilizes electromagnetic radiation of a selected wavelength/frequency range. The present technique may be used with RF radiation, microwave radiation, infrared radiation, visible light, ultraviolet radiation, etc. and may also operate using acoustic waves including ultrasonic and infrasonic signal. Accordingly, the terms optic or optical elements should be understood broadly as relating to suitable elements configured to manipulate wave-like radiation of the selected wavelength range. Further it should be understood that the terms interference and mixing may be used herein interchangeably when relating to generating phase sensitive sum of two EM beams. Additionally, it should be noted that the term light used herein as relating to EM radiation and is not limited to optical wavelength range as conventionally used.

As indicated above, the present technique utilizes control and variation of coherence lengths between the first and second reference beams, rather than variation in length of the reference arms. This enables selective variation of the coherence lengths, e.g., using controllable noise patterns, allowing increased dynamic range. More specifically, by proper selection of the coherence lengths, the present technique can be tuned for long distance measurements, or accuracy in short distance measurements, based on user requirements.

The present technique provides an optical system comprising one or more light sources providing one or more beams of coherent illumination of a selected wavelength range, an optical arrangement, and a detection unit. The optical arrangement is configured to direct a portion of beam toward a target, and a portion of the beam toward at least first and second reference paths. The optical arrangement further includes collection arrangement (e.g., one or more lenses, beam splitters, apertures, or other optical elements) configured for collecting portions of the beam reflected from the target and directing the collected beam to mix with beams of the first and second reference arms, providing at least first and second interfering signals. This configuration may form at least first and second interferometer loops, each comprising a reference arm and an interrogating arm, where the interrogating or reference arm may be common between the first and second interferometer loops. Where, each of the interferometer loops is configured to direct the interfering signal to be detected by a corresponding detector of the detection unit. The interrogating arms, being separate interrogating arms or a common interrogating arm, direct the interrogating beam portions toward a target.

Generally, the optical arrangement may include one or more lens arrangements positioned to direct interrogating beam toward the target and for collecting beam portions reflected from the target. The one or more lens arrangement may be selected to determine field of view of target detection. More specifically, in some configurations the lens arrangement may be selected with to provide relatively collimated interrogating beam for determining distance on a single object, utilizing detection unit having at least first and second detectors for detection of the first and second interfering signals. In some other configurations, the system may be configured to map distances to various items within a field of view, where the detection unit comprises at least first and second detector arrays. The lens arrangement is configured to direct the interrogating beam toward a field of view, and to collect reflected beam portions from the field of view for imaging the collected beam portions onto the first and second detector arrays. The at least first and second reference beams are respectively directed to the first and second detector arrays to provide interfering signals on the respective detector cells.

The present technique utilizes certain noise within signal propagation, thereby enabling to vary coherence relations between the interrogating beam and the first and second reference beams. Thus, effectively varying coherence length of EM beams travelling in the first and second interferometer loops. The introduced noise affects coherence between beam portions following (downstream of) the respective noise generators enabling variation of coherence relations between the beams. Generally, the introduced noise may be of any phase and/or amplitude pattern and may be selected in accordance with resulting coherence length generated by selected noise pattern. In some examples, the noise may be in the form of random, pseudo-random or selected pattern of phase or amplitude variations along the beam.

Thus, noise introduced to the interrogating beam downstream of splitting of the first reference beam does not affect relative coherence between them, but only affects phase difference $\varphi$. This is while noise introduced upstream to splitting second reference beam from the interrogating beam affects relative coherence, as paths (propagation length) of the beams are different.

Accordingly, this provides interfering signals obtained by at least first and second interferometer loops having different coherence length, while generally having similar reflection and coupling characteristics. The at least first and second interfering signals provide the present technique corresponding at least first and second measurements indicative of a distance to the target object. Generally, the present technique utilizes the at least first and second measurements indicative of distance, associated with the first and second interferometer loop, to determine distance irrespective of unknown data elements associated with reflectivity of the object target and energy loss in collection of the reflected signal. It should be noted that constant variation in reflection and/or coupling characteristics between the first and second interferometer loops may be resolved by calibration or the system to selected distances. Alternatively, such variation in reflection and/or coupling characteristics may be resolved by determining distance data by frequency detection as described above.

More specifically, detection of the interfering signals from the first and second interferometer loops provides data indicative of a range to the target. The at least first and second interfering signals provide level of coherence (associated with intensity and/or amplitude of peak beating-frequency) between the respective reference and interrogating beams. The optical system may be associated with a control circuit, e.g., a computer system comprising one or more processors and memory circuitry, for determining the target range based on the detected interfering signals. The control circuit may utilize pre-stored data indicative on emitted intensity of the first and second beams and may include additional pre-stored data as described in more detail further below.

As indicated above, the interference signal detected by the respective detector unit is exemplified for Lorentzian beams in equation 1. Accordingly, the resulting detected signal depends on amplitudes of the reference and interrogating beams, reflectance of the target, ratio between target range and coherence length, and relative phase between the reference and interrogating beams. To remove ambiguity associated with relative phase difference, the optical system may utilize a phase modulator affecting the interrogating beam (upstream or downstream of the target) for modulating phase thereof, providing periodic $2\pi$ phase modulation to collected signal, typically at a selected frequency. This enables to compensate for any phase difference, providing signal indicative of level of coherence. Alternatively, in some embodiments a phase difference between beams of the first and second interferometer loops may be selectively varied. This enables to determine detection signal associated with contrast between maximum and minimum interference intensities indicative of the target range. The detection signal may be determined in accordance with amplitude of the phase oscillation (in parallel to contrast of interference fringes) and omit the relative phase factor.

More specifically, the detection unit may operate for detecting interfering signals in selected sampling rate. Additionally, the phase modulator may apply varying phase between 0 and $2\pi$ so that each detection instance has slightly different phase shift between the reference and interrogating/collected beams. Frequency of operation of the phase modulator acts as beating frequency determining peak frequency, and considering selected number of detection instances, this measurement techniques enables to determine the contrast between interference signals and thus determine coherence between the reference and interrogating/collected beams. Further, the detection unit may include analog processing of the interfering signal, e.g., to provide RMS (Root Mean Square) signal detection associated with contrast between the maximal and minimal interference signals. In some configurations, the detector units may be configured as RMS detectors providing output data indicative of RMS signal by analog processing.

To this end, the present technique utilizes first detection indicative of interference signals within the first interferometer loop, and second detection indicative of interference signal within the second interferometer loop to determine data on coherence level of the first and second interfering signals. Typically, the first and second detections may be operated for collecting interfering signals to provide level of coherence between the reference and interrogating signal portions thereof. To this end the present technique may utilize phase modulator affecting phase of at least one of the interrogating beam portions, collected beam portion, or the reference beam portions, to vary phase in selected cycles (e.g., $2\pi$ cycles) at a selected frequency, to thereby enable detection of contrast between maximal and minimal intensity of the interfering signal. Coherence level of the interfering signals can be determined in accordance with amplitude of peak frequency of collected interfering signal. The contrast in interference is described for example in equation 1 for the case of Lorentzian spectrum beams. In the general case, the contrast in the interference signal depends on a relation between distance to the target $\Delta x$ and coherence length of the emitted beam *lc.* Generally, the relation may be exponential (as for Lorentzian spectrum beam), exponential of quadratic (as for Gaussian spectrum beam) or other functions in accordance with the spectral shape of the beam. Using the first and second interferometer loops operating with beams of respective first and second different coherence lengths, the present technique enables determining distance to the target $\Delta x$ based on the respective interfering signals.

To simplify arrangement of the optical system, and to avoid the need of separating between collected EM signals associated with the first or second interferometer loops, the interrogating arms may be overlapping. More specifically, the first and second interferometer loops may utilize a common interrogating arm, directing EM beam toward the target, and common collection optics collecting beam reflected from the target. The collected beam is typically split to enable mixing/interference with reference beams of the first and second interferometer loops.

In some exemplary configurations, the optical system may comprise a light source unit configured for providing optical illumination having certain coherence length, an optical arrangement configured for directing one or more interrogating beams toward a target object and a collection unit configured for collecting at least a portion of light reflected from said target object, and a detection unit comprises at least first and second detectors. The optical arrangement comprises a beam splitting unit configured for splitting light from said light source unit to form the one or more interrogating beam and at least first and second reference signals. The collection unit comprises a light splitting unit configured to split collected light to at least first and second portions, directing the first and second portions to combine respectively with the first and second reference arms. The combined signals (interference signals) of the first and second portions of the collected light with the first and second reference signals are directed respectively to corresponding ones of the at least first and second detectors. The level of coherence of the detected interference signals are indicative of range/distance to the target. To vary coherence length of light portions between first and second interferometer loops, the optical arrangement further comprises at least one noise generator (e.g., random phase modulator) configured to apply selected variation to said one or more interrogating beam and/or one of the first and second reference arms. The noise variation may be random, pseudo-random, or other selected noise patterns. The noise generator may be configured as white noise generator, phase modulator, Optical Amplifier, e.g., Semiconductor Optical Amplifier Erbium-Doped Fiber Amplifier, or any other optical unit that can be configured to apply selected noise affecting at least phase of the emitted beam. The selected noise pattern (e.g., phase modulation pattern) is selected to increase/decrease coherence length of beam on which it is applied. The generally random noise causes a difference in coherence properties between said first and second interferometer loops, providing that the first and second interfering signals are formed by light of first and second different coherence lengths. Further, the use of random or pseudo-random noise enables selection of coherence length based on noise level. This is associated with pattern of the generated noise, noise frequency, noise amplitude, and statistical parameters of the noise such as autocorrelation, standard deviation, random walk step, etc.

The configuration of the range detection technique as described herein enables simultaneous detection of wide range of distances. More specifically, the present technique relies on detection of reducing coherence of EM radiation. Accordingly, the present technique enables combined detection of distances of a plurality of objects at different ranges. To this end, the interrogating beam may be transmitted with a divergence angle, providing a wide beam that covers certain field of view. Additionally, the detector unit may include two or more detector arrays, where different cells of the detector arrays are positioned to detect level of coherence of interference signal, caused by interference of a portion of collected radiation, at image plane, and a portion of respective reference beam. To this end, the collecting optics may be configured to collect reflected radiation from the field of view and image the collected radiation on an image plane, where the collected beam portions are split and interfered/mixed with respective portions of the at least first and second reference beams.

In this configuration, the detector arrays provide image data pieces, where a relation between corresponding pixels in the first and second detector arrays, provide data indicative of range to the respective point in the field of view. This configuration thus enables single shot acquisition of three-dimensional image data that includes data on range of different objects/points within the field of view. Such detector arrays may be one- or two-dimensional detector arrays. More specifically, the use of one-dimensional detector arrays provides one-dimensional image data, that can be scanned along a perpendicular axis to obtain two-dimensional image data.

Additionally, as indicated above, the present technique may utilize data on coherence part i.e., the amplitude of peak beating-frequency of the first and second interfering signals. This also enables the detection of doppler shift, associated with shift of peak frequency of the signals, for determining velocity of different points in the scene. Generally, without any variation between detection instances, the beating-frequency may equal to zero. Similarly, in analog processing, the signal may be generally constant, indicting zero beating frequency. Operation of the phase modulator at a selected frequency shifts the peak beating-frequency to operating frequency of the phase modulator. Further in case of moving target, Doppler shift further shifts the peak beating-frequency in accordance with closing speed of the target, thereby enabling to determine target speed as well as its distance.

Further, it should be noted that coherence of the first and second (or more) reference beams is different relative to the interrogating beam. In other words, the at least first and second interferometer loops utilize EM beams having different coherence lengths. This provides variation in coherence term of the detecting interfering signals as described by equation 1.

As indicated above, the present technique utilizes noise generator for affecting the coherence length of beams in the first and second interferometer loops, generally enabling to selectively vary their coherence lengths thereof. Generally, it may be preferred that at least one of the first and second coherence lengths (for the first and second interferometer loops) is of the order of the measured distance. Thus, selection of the coherence lengths may enable adjustment of sensitivity and accuracy of distance detection by the present technique for various distances

In this connection, the noise generator may for example be configured as random phase modulator, optical amplifier, or other suitable techniques, applying a noise pattern affecting EM radiation passing therethrough. Selection of noise patterns enable adjustment of selected coherence lengths for the EM beams of the first and second interferometer loops.

Thus, the present invention provides an optical system comprising one or more light sources providing coherent illumination of a selected wavelength range, an optical arrangement, and a detection unit; said optical arrangement comprises optical elements forming at least first and second interferometer loops, each comprising a reference arm and an interrogating arm, said at least first and second interferometer loops being associated with corresponding at least first and second detectors of the detection unit; light propagating in said interrogating arm is directed at a target object via an output optical element and a reflection of light from said target object is collected by an input optical element; said detection unit comprises at least first and second detectors configured for detection of interfering signals of the respective one of the first and second interferometer loops, said detection unit is configured to determine data indicative of a relation between signals detected by the at least first and second detectors; wherein, one of said first and second interferometer loops comprises a first noise generator positioned to affect light propagating in both of the corresponding reference and interrogating arms, thereby affecting coherence of light in said interferometer loops.

According to some embodiments, a ratio between measured signal of the at least first and second interferometer loops may be indicative of range to said target object.

According to some embodiments, the at least first and second detectors may be configured for providing output signal indicative of coherence term between respective beam components of the reference and interrogating arms.

According to some embodiments, the interrogating arm may be common between said first and second interferometer loops, and wherein said first noise generator is positioned to affect light propagating in said interrogating arm of the one interferometer loop and in both interrogating and reference arm of the other interferometer loop, thereby affecting coherence relation between the reference and interrogating arms of the other interferometer loop.

According to some embodiments, the system may further comprise an additional noise generator positioned in path of beam in said other interferometer loop, said additional noise generator is configured to apply noise correlated with noise of said first noise generator.

According to some embodiments, the at least first and second detectors may be balanced detectors with respect to output of the first and second interferometer loops.

According to some embodiments, the at least first and second detectors may be RMS detectors configured for generating output signal indicative of power of the interfering signals within a selected frequency range.

According to some embodiments, the first and second detectors may be configured for generating corresponding detection sequences at selected sampling frequencies, a ratio between amplitude at peak signal frequency being indicative of a distance to said target object.

According to some embodiments, the light source unit may comprise a coherent light source and a second noise generator, said second noise generator is configured to affect coherence length of output light from said coherent light source. The coherent light source may be a laser system operating in CW or pulse mode.

According to some embodiments, the system may further comprise a phase modulator positioned in path of beam directed toward or collected from the target element, said phase modulator being configured to apply varying phase modulation in collected light at selected frequency, thereby enabling detection of coherence term of interference signal.

According to some embodiments, the system may further comprise at least one phase modulator positioned in paths of beam directed toward reference arms of said first and second interferometer loops, for modulating phase of the respective reference beams at selected modulation frequencies, thereby shifting beating frequencies of the collected interfering signals.

The phase modulators of the first and second interferometer loops may operate at first and second different modulation frequencies, generating respective first and second different beating frequencies for signals of the first and second interferometer loops.

The phase modulators may operate for varying phase in a selected sequence. It should be noted that a relation between sampling rate of the detector and rate of phase variation of the phase modulator determine the selected frequency.

According to the present invention the system further comprises a control circuit configured and operable to receive detected signals from said detection unit, said detected signal being associated with coherence terms for beams in said first and second interferometer loops.

According to the present invention the control circuit is configured and operable to determine a relation $\Gamma$ (Gamma) between mutual coherence factors detected by said detection unit for said at least first and second interferometer loops, said relation $\Gamma$ being indicative of a range to said target object.

According to the present invention the control circuit is configured and operable to utilize data on effective coherence length for said at least first and second interferometer loops to determine range to said target object.

According to some embodiments the control circuit may be configured for analyzing variation frequency of the detected signals from said detection unit, said analyzing comprising determining peak frequency of variation of the detected signals and power of peak frequency components, a relation between power of peak frequency components of signal of the at least first and second interferometer loops being indicative of range to said target object

According to some embodiments the detection unit may comprise at least first and second detector arrays, said optical arrangement comprises imaging optical arrangement for generating an interference of image of said target object and respective first and second reference beams onto said first and second detector arrays, to thereby generate interference data of said image on the corresponding one of the first and second first and second detector arrays respectively, thereby enabling range detection of a selected field of view.

According to some embodiments the optical arrangement may be configured for transmitting said light propagating in said interrogating arm toward a selected field of view comprising at least one of said target object

According to some embodiments the system may further comprise a scanning unit configured for varying direction of said interrogating beam, thereby enabling scanning of a field comprising said target object. The scanning unit may comprise one or more of optical phased array unit, beam steering unit, diffractive element, scanning mirror and/or MEMs scanner.

According to some embodiments the optical arrangement may comprise at least one optical fiber section. The reference arm of said first and second interferometer loops may be formed by optical fiber.

According to some embodiments the optical arrangement may comprise at least one free-space propagation section associated with at least one of said first and second reference arms.

According to some embodiments the system may comprise at least a portion of said system configured as a system on chip.

The system may be configured as a whole system on a chip.

According to some embodiments the at least first and second interferometer loops may comprise at least additional third interferometer loop, thereby enhancing accuracy of range detection.

According to some embodiments the system may further comprise a coherence length/linewidth measurement unit positioned at output of said one or more light sources, said coherence length measurement unit is configured to periodically or continuously determine/measure coherence level of emitted beam, to thereby generate data oh initial coherence length of emitted beam for calibration of range detection by the system.

According to one example, the present disclosure also provides a system comprising:

at least one light source unit configured to provide optical illumination having certain coherence length;
and optical arrangement comprising at least one splitting unit, said splitting unit being configured for directing said optical illumination to form at least one reference beam and at least one interrogating beam, and for directing said at least one interrogating beam toward a target;
a light collection unit configured for collecting light of said at least one interrogating beam reflected from said target, and direct collected light to a detection unit;
a detection unit comprising at least two detectors, each configured for detecting combined illumination formed by at least a portion of a reference beam and a portion of collected light and generate detection data, said detection data being indicative of a distance to said target; and
wherein said at least one reference beam comprise at least two reference beams; and wherein the system comprises a noise generating unit configured to affect coherence length of light in one of the reference arms with respect to the other.

The system may be further configured as indicated above.

According to another example, the present disclosure provides a system comprising:

at least one light source unit configured to provide optical illumination having certain coherence length;
and optical arrangement comprising at least one splitting unit, said splitting unit being configured for directing said optical illumination to form at least one reference beam and at least one interrogating beam, and for directing said at least one interrogating beam toward a target;
a light collection unit configured for collecting light of said at least one interrogating beam reflected from said target, and direct collected light to a detection unit;
a detection unit comprising at least two detectors, each configured for detecting combined illumination formed by at least a portion of a reference beam and a portion of collected light and generate detection data, said detection data being indicative of a distance to said target; and
wherein said at least one interrogating beam comprise at least two interrogating beams different between them in wavelength; and wherein the system comprises a noise generating unit configured to affect coherence length of light in one of said at least two interrogating beams the interrogating beams.

According to another example, the present disclosure provides a system comprising a light source unit configured for providing optical illumination having certain coherence length, an optical arrangement configured for directing one or more interrogating beams toward a target object and a collection unit configured for collecting at least a portion of light reflected from said target object, and a detection unit comprises at least first and second detectors; said optical arrangement comprises a beam splitting unit configured for splitting light from said light source unit to form said one or more interrogating beam and at least first and second reference signals; said collection unit comprises a light splitting unit configured to split said collecting light to at least first and second portions; said at least first detectors is positioned and configured for combined detection of interference light of said first reference signal and first portion of the collected light, and said second detector is positioned and configured for combined detection of interference light of said second reference arm and second portion of the collected light; wherein said optical arrangement comprises at least one noise generator configured to apply selected random variation to said one or more interrogating beam and said second reference arm, thereby generating a difference in coherence properties between said first and second reference arms with respect to the collected light, said detector unit thereby provides output detection data indicative of range to said target object.

According to yet another example, the present disclosure provides a method for use in determining range to a target object, the method comprising:

providing electromagnetic (EM) beam portions propagation in at least first and second interferometer loops, each interferometer loops comprising at least reference arm and interrogating arm, said interrogating arm being configured to direct a portion of said EM beam toward a target object and collected reflected EM beam; said at least first and second interferometer loops thereby provide measurable data on interference between reference beam and interrogating beams reflected from said target object; wherein EM beam portions of said at least first and second interferometer loops being characterized in at least first and second different coherence lengths; processing said measurable data on interference obtained from said first and second interferometer loops and determining range to said target object.

Furthermore, the present invention provides a method for use in determining range to a target object, the method comprising:

a. providing electromagnetic (EM) beam of certain coherence length;
b. directing at least first and second portions of the EM beam toward first and second reference arms
c. directing at least a third portion of the EM beam toward said target object;
d. collecting reflected radiation comprising EM beam components reflected from said target object, and directing first and second portions of the reflected radiation to interfere with EM beams of said first and second reference arms, and determining first and second interference intensities associated with interference of said first and second portions of reflected light with light of said first and second reference arms respectively; and
e. processing data on said first and second interference intensities to determine range to said target object; wherein the method comprising applying selected noise affecting relative coherence between at least one of said first and second portions of illumination and said third portion of the EM beam.

The data on first and second interference intensities is associated with interference levels of the first and second portions of the EM beam and is associated with the selected noise affecting coherence of at least one of said first and second portions of illumination and said third portion of the EM beam.
According to some embodiments, said processing comprises determining constant and mutual coherence portions of said first and second interference intensities and determining a ratio between mutual coherence factor of said first and second interference intensities.
According to the present invention, said processing comprises providing data on coherence lengths of light portions in said first and second reference arms and utilizing a relative difference in the coherence lengths or levels for determine range to said target object.

## BRIEF DESCRIPTION OF THE DRAWINGS

In order to understand the invention and to see how it may be carried out in practice, embodiments will now be described, by way of non-limiting example only, with reference to the accompanying drawings. Features shown in the drawings are meant to be illustrative of only some embodiments of the invention, unless otherwise implicitly indicated. The full scope of the present invention is only limited by the appended claims.
In the drawings like reference numerals are used to indicate corresponding parts, and in which:

Fig. 1 schematically illustrates a system for range and distance detection according to some embodiments of the present invention;
Fig. 2 illustrates a system for range and distance detection implements in fiber configuration according to some embodiments of the present invention;
Figs. 3A and 3B exemplify effect of location of noise generator according to some embodiments of the present invention; and
Fig. 4 illustrates a system for distance detection from a field of view according to some embodiments of the present invention.

## DETAILED DESCRIPTION OF EMBODIMENTS

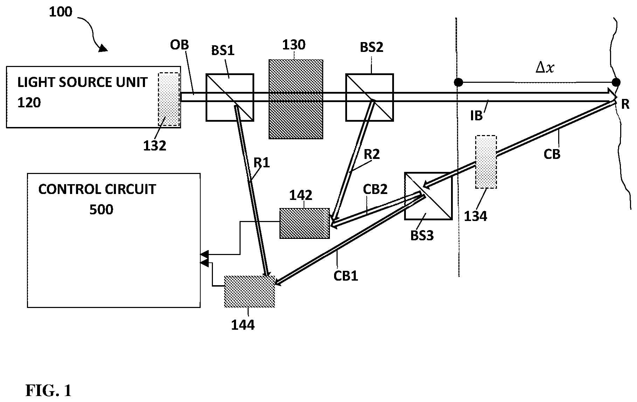

As indicated above, the present invention utilizes detection of at least first and second interference intensities and determining a relation between the interference intensities for determining a distance of one or more target objects. Reference is made to Fig. 1 schematically illustrating a system 100 for range detection according to some embodiments of the present invention.
The invention provides for optical range detection based on interference of at least partially coherent illumination having certain, typically finite, coherence length. The technique utilizes output illumination having certain coherence length. The output illumination is split to form at least first and second reference beams and at least one interrogating beam, or to at least first and second interrogating beams and at least one 03016522\10-01 reference beam. Additionally, the optical arrangement includes at least one noise generator unit 130 configured to apply selected noise pattern to beam portions to thereby vary coherence length of the beam portion. This generally enables providing coherence length variation between the first and second reference beams.

**Fig. 1** illustrates system **100** including a light source unit **120,** configured to provide electromagnetic radiation **OB** (generally optical, but RF, Infrared, microwave, or ultraviolet radiation may also be used with proper modification clear to a person skilled in the art) of selected wavelength range and coherence length. EM radiation **OB** is split by splitters **BS1** and **BS2** to propagate in at least first and second interferometer loops including reference beams **R1** and **R2** and output interrogating beam **IB**. The interrogating beam **IB** is directed by transmitting optical arrangement (not shown) toward a target object **R** located at unknown distance $\Delta x$ and reflected portions of the beam **CB** are collected by collecting optical arrangement into the system **100**. The collected beam **CB** is split by splitter **BS3** to two or more portions **CB1** and **CB2,** directed to mix/interfere with reference beams **R1** and **R2** respectively. The interference intensities of the reference beams **R1** and **R2** with the respective portions of collected beams **CB1** and **CB2,** are collected by detector elements **144** and **142** to provide respective detected electric signals. Additional beam splitter/combiners may generally be used to align collected beams **CB1** and **CB2** with the respective reference beams **R1** and **R2**.

This configuration provides first and second interferometer loops, where a first loop includes reference beam **R1**, interrogating beam **IB** and collected beam **CB1,** where interference signal of reference beam **R1** and collected beam **CB1** is detected by detector **144;** and a second loop includes reference beam **R2**, interrogating beam **IB** and collected beam **CB2,** where interference signal of reference beam **R2** and collected beam **CB2** is detected by detector **142.**

Detector elements **142** and **144** may be single pixel detectors (e.g., photodiodes), or detector arrays as described further below. Additionally, detectors **142** and **144** may be configured as RMS detectors or balanced detectors, operable to provide output data indicative of coherence of the interfering signals or be operable for collecting a sequence of detection instances in a selected sampling rate, allowing further processing of the collected signals to determine coherence of the interfering signals. For example, coherence level of the interfering signals may be determined in accordance with phase fluctuations in the interference signal reducing energy in peak frequency of signal, or contrast variations of the interfering signal.

A first noise generator **130** is positioned in path of the EM beam downstream of splitter **BS1**. In some embodiments, an additional second noise generator **132** may be positioned in path of EM beam emitted from source **120,** applying initial reduction in coherence length of emitted radiation and enable selective variation of initial coherence length of output light. Generally, second noise generator **132** may be associated with source **120**. The first noise generator **130** (and second noise generator **132** when used) may be random phase modulator, phase noise generator, or other noise generating unit. The first noise generator **130** is configured to apply selected noise pattern that may be selected from predetermined noise patterns, random noise pattern or pseudo-random noise pattern, that affects the **EM** beam passing therethrough. Location of the first noise generator **130,** downstream of splitter **BS1** provides that the applied noise varies/reduces coherence length of EM radiation propagating in the second interferometer loop, with respect to the beam propagating in the first interferometer loop. More specifically, the first noise generator **130** is positioned to affect both reference and interrogating arms of the second interferometer loop, accordingly it effectively reduces coherence length of EM beam propagating in the second loop, compared to coherence length of the EM beam in the first loop. Following path of the EM beam in the first interferometer loop, the first noise generator **130** affects interrogating beam part of the first interferometer loop, causing phase variation in the detected signal without affecting coherence length of the beam propagating in the first interferometer loop.

One or more of the noise generators **130** and **132** may include, or be associated with, a linewidth measurement unit (not specifically shown). The linewidth measurement unit may be configured for monitoring linewidth/bandwidth of beam output from the noise generator and generate data indicative thereof. The linewidth data may be transmitted to the control circuit to provide input data indicative of coherence length *lc1* and/or *lc2* for the first and second interferometer loops. The coherence length data is typically stored in the control circuit for determining coherence variation parameter K as described further below.

In some embodiments, an additional noise generator (not specifically shown) may be positioned along poach of **R1** or **CB1** beams. The additional noise generator may be configured to provide correlated noise pattern in accordance with first noise generator **130**. This enables to compensate for phase variations associated with noise affecting the interrogating beam **IB**.

An additional phase modulator **134** may be placed in path of interrogating beam, i.e., affecting output beam **IB** or collected beam **CB.** The phase modulator **134** generally operates to periodically shift phase of the interrogating beam within a selected phase range and/or selected frequency (e.g., applying phase modulation in a range of $2\pi$), to thereby oscillate phase difference $\varphi$ of the detected interfering signals, collected by detectors **144** and **142** by the factor of *cos*($\varphi$). Generally, phase modulator **134** may be operated to generate a frequency shift on the collected beam **CB** (or on output beam **IB)** relative to the reference, thus shifting frequency of the interfering signal from DC (zero frequency) to a selected modulation frequency. This is important for avoiding any phase ambiguity and/or for shifting the measured signal to a desired frequency and further enabling detection of Doppler shift due to target closing speed.

Thus, phase modulator **134** enables to remove signal variation associated with phase miss-match $\varphi$ between

reference beam and interrogating beam and enable detection of contrast between maximal constructive interference and destructive interfering signals. As indicated in equation 1, the contrast is associated with coherence term between the interrogating and reference beams. For example, phase modulator **134** may operate to modulate phase of the beam by 0-2$\pi$ (or by -$\pi$ to $\pi$) range, to enable detection of contrast between interfering minima and maxima. It should be noted that phase modulator **134** may be positioned at output of interrogating beam **IB,** input of collected beam **CB** as exemplified in **Fig. 1** and may also be placed in any place along path of one of the interrogating and collected beams. Alternatively, phase modulator **134** may be positioned to affect both reference beams **R1** and **R2.** In case of phase modulator **134** positioned along reference beams **R1** and **R2,** two phase modulators **134a** and **134b** may be used, modulating the reference beams **R1** and **R2** at different frequencies. This may enable the use of single detector unit, where first and second interfering signals are determined based on first and second peak frequencies.

Accordingly, with the assumption of Lorentzian beams, intensity of EM beams collected at the first and second detectors **144** and **142** can be expressed by

$$I_1 = \left[ I_{R1} + \eta_{S1} I_{IB} + 2 \cdot \sqrt{I_{R1} \eta_{S1} I_{IB}} \cdot cos(\varphi_1) \cdot e^{-\frac{r-L_1}{lc1}} \right]$$

$$I_2 = \left[ I_{R2} + \eta_{S2} I_{IB} + 2 \cdot \sqrt{I_{R2} \eta_{S2} I_{IB}} \cdot cos(\varphi_2) \cdot e^{-\frac{r-L_2}{lc2}} \right] \qquad \text{(Equation 2)}$$

Where $I_{R1}$, $I_{R2}$, $I_{IB}$ are intensities of first and second reference beams and the interrogating beam respectively, $\eta_{S1}$ and $\eta_{S2}$ are effective collection efficiency for the first and second portions of the collected beams, generally associated with reflectance of the target and numerical aperture of the collection optics. $L_1$ and $L_2$ are respective effective lengths for the first and second interferometer loops, determined by difference between reference arm length and fixed length of interrogating and collection paths. While the distance to the target object is $\Delta x$, the interrogating and collected beam has a typically longer path as it goes to the target and back and may have certain path within the system. Accordingly, the beam path length may be $r = 2\Delta x - \Delta r$ where $\Delta r$ is the different between length of the reference arm within the system prior to splitting of the interrogating arm. Generally, utilizing proper splitting elements **BS1, BS2** and **BS3,** the respective intensities along the reference arms $I_{R1}$, $I_{R2}$ may have known relations, and are assumed to be equal for simplicity. Similarly, the effective collection efficiencies $\eta_{S1}$ and $\eta_{S2}$ may have known relation and are assumed to be equal for simplicity.

The constant terms that are not dependent on range $\Delta x$ may be determined separately or removed using suitable detection scheme. For example, the oscillating term $cos(\varphi_1)$ can be removed using the phase modulator **134.** Power-/intensity of the reference and interrogating beams may be removed based on pre-stored data or utilizing balanced detector arrangement as exemplified below. Accordingly, the coherence terms $C1$ and $C2$ for the first and second interferometer loops are determined providing data on distance (range) to the target object.

$$C1 = \sqrt{I_{R1} \eta_{S1} I_{IB}} \cdot e^{-\frac{r}{lc1}}$$

$$C2 = \sqrt{I_{R2} \eta_{S2} I_{IB}} \cdot e^{-\frac{r}{lc2}} \qquad \text{(Equation 3)}$$

Assuming similar effective lengths $L_1$ and $L_2$, and collection efficiency $\eta_{S1} = \eta_{S2} = \eta$. Eliminating the DC terms and dividing the signal from the detectors provides:

$$\frac{C2}{C1} = \Gamma = e^{-\Delta x \left( \frac{1}{lc2} - \frac{1}{lc2} \right)} = e^{-\Delta x K} \qquad \text{(Equation 4)}$$

Also referred herein as Gamma factor. Utilizing pre-known data on coherence lengths $lc1$ and $lc2$, the coherence variation parameter $K = \left( \frac{1}{lc2} - \frac{1}{lc2} \right)$ can be determined and stored (e.g., at a memory unit). For the general case, coherence variation parameter K may also be dependent on difference in path between the first and second interferometer loops.

This enables to determine the gamma factor and accordingly to determine the range to a target $\Delta x$ by:

$$\Delta x = -A \frac{ln(\Gamma)}{K} + B \qquad \text{(Equation 5)}$$

where A and B are calibration parameters associated with internal paths of the beams within the system and their relative intensities.

It should be noted that in case of beams having spectrum other than Lorentzian, the above defined Gamma factor ($\Gamma$) may be formulated as other functions of the coherence terms *C1* and *C2*. This may be due to exponential quadratic (for Gaussian beam) or other dependency of the coherence term in distance.

As indicated above, coherence length *lc1* and *lc2* are associated with pattern of noise/phase variations applied by noise generators **130** and **132**. Further, the natural lengths $L_1$ and $L_2$ associated with the first and second interferometer loops may be equal or not, while the difference between the interferometer loops is based on the coherence lengths thereof. Generally, difference in length $L_1$ and $L_2$ may be handled by calibration and determining coherence variation parameter K to include a difference factor. Accordingly, utilizing pre-stored data on relative transmission/reflection coefficients and emission intensity, lengths of the interferometer loops, and data on effective coherence lengths for the first and second interferometer loops, enable determining $\Delta x$ being a distance/range from the system to object R.

It should be understood that the present technique is described herein using certain assumptions for simplicity, and may be operated with different configurations, for example, the technique is generally described herein using equal intensities of reference beams **R1** and **R2,** or first and second signal beams **CB1** and **CB2**. It should be understood that this is a design preference and variation in power between the first and second interferometer loops may render functional or constant variation of the pre-stored coherence variation parameter K, and/or in determining of the range based on detected intensities. Such variations may be associated with calibration data stored and used by the control circuit **500.**

It should also be noted that the present technique may utilize detection of frequency (temporal changes) variations of the detected signals. Using detection unit (**142** and **144**) having bandwidth that is faster with respect to linewidth of the light source 120, interference signal variations are detected, however frequency of the interference signal varies in accordance with the coherence term described above. Accordingly, the Gamma factor can be determined based on relative amplitude of peak frequency of the first and second detected signals, rather than the average (integrated) intensity.

Accordingly, the system **100** may include a control circuit **500,** connectable to at least the first and second detectors **144** and **142** for receiving data on detected intensities and configured for processing the received intensity data and determining accordingly data on range between the system and one or more target objects. The control circuit may also be connectable to the light source unit **120,** and to the one or more noise generators **130, 132** and phase modulator **134** for providing operational instructions determining operation of the system, such as selected noise pattern and phase modulation frequency.

The control circuit **500** may utilize at least one processor and memory unit, operatively connectable to a hardware based I/O interface including communication with the above indicated elements of the system and user interface. The control circuit may thus include one or more processors and memory unit. The memory unit may include pre-stored data on operation of the system and computer readable instructions that when executed by the processor cause the processor to operate for determining range to one or more target objects as described herein.

As indicated above, the processor unit of the control circuit may be operable for receiving data from the first and second detector units **142** and **144,** and for each detector unit, to determine data indicative of contrast between maximal and minimal collected signals, also referred herein as coherence terms. The processor is further configured for determining a relation between the first and second coherence terms and determining accordingly a range to the object.

Generally, for each of the interferometer loops, maximum amplitude is achieved for range $\Delta x$ being equal to effective length of the reference path. More specifically, in cases where the interrogating beam, in its path within the system and to the target object and back, propagate a similar distance as the respective reference beam. Further, for variations in path between the interrogating beam and reference beam, the coherence terms reduce due to relative decoherence of the beams. As the coherence lengths of beams in the first and second interferometer loops are different, the rate of decoherence varies between the first and second interferometer loops, providing two (or more) separate signals, associated with target distance. This enables to compensate for possible unknowns such as the effective collection and the reflectivity of the target **R.**

In some configurations, the system **100** may be operable using single reference beam and first and second interrogating beams. Such configurations may be in mirror reflection of **Fig. 1,** where a first interrogating beam is directed at the target object upstream of first noise generator **130,** and second interrogating beam is directed at the target object downstream of the noise generator **130.** The first and second interrogating beams may be temporally or spectrally separated, time multiplexed between them, and/or modulated in different beating frequencies (e.g., by phase modulators **134a** and **134b** mentioned above) enabling to distinguish between them to determine first and second interfering signals by detector units. In some additional configurations, the system may utilize first, and second separate interferometer loops associated with first and second different wavelengths (enabling to distinguish between interrogating beams, and first and second different coherence lengths.

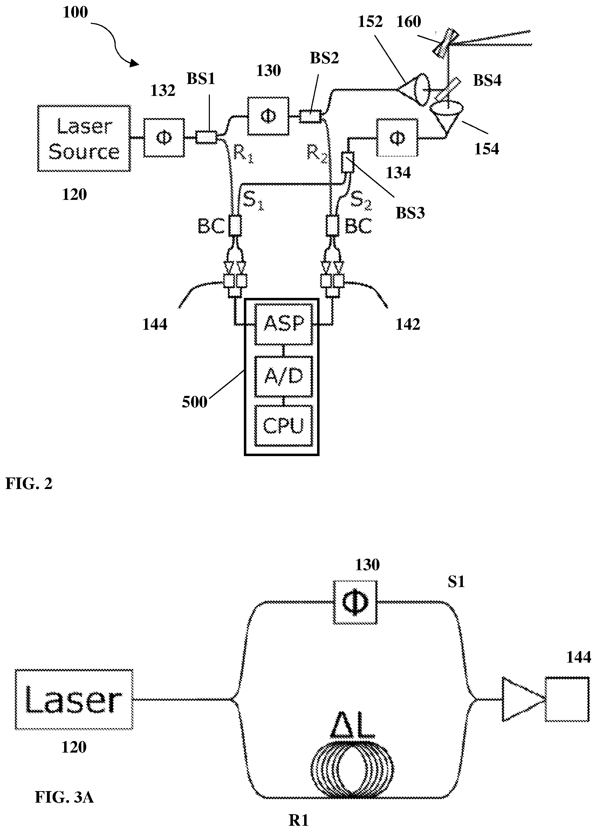

Reference is made to **Fig. 2** exemplifying configuration of a range detection system **100** according to some embodiments. System **100** includes a laser light source **120,** first beam splitter **BS1** directing a portion of light toward reference path **R1** and a portion of light toward a first noise generator **130,** second beam splitter **BS2** directing a portion of light toward reference path **R2** and a portion of light to interrogating beam. The interrogating beam is transmitted via transmitting optics **152** toward a target, and light reflected from the target is collected by collecting optics **154.** In this example, the outcoupling optics also includes a scanning mirror **160** enabling scanning of a selected region to determine ranges to various objects in a field, and beams splitter **BS4** configured to direct outgoing beam toward the scanner **160** and collected beams toward the collecting optics **154.** Additionally, or alternatively, as indicated further below, the interrogating and collected beams may be directed via common lens optical elements (e.g., collimating lens), and using a circulator or beam splitter such as **BS4** for directing the collected beam within the system.

Generally, scanner **160** may utilize any scanning mechanism such as MEMS mirror, galvanometric mirror, or rotating wheel. Scanner **160** is associated with a control circuit providing scanning of a selected field of view in selected scanning rate. Additionally, or alternatively, the scanner **160** may be formed by OPA (Optical Phased Array), enabling beam steering of interrogating beam **IB.** Further additionally or alternatively, the scanner **160** may utilize controllable Grating, Prism, or other diffractive/refractive elements enabling to selectively direct interrogating beam toward and selected direction and collect reflected beam from the corresponding direction. The scanner **160** may be connectable to the control circuit **500** configured to synchronize scanning operation with frame rate of detector units **144** and **142,** to provide data indicative of angular direction associated with the different detection instances.

The collected beam is typically transmitted through a collection phase modulator **134** configured to apply selected frequency shift to phase of the collected beam, to enable extraction of coherence level of the interfering signal. For example, the coherence level may be determined by peak amplitude in frequency domain or by contrast of the signal between minima and maxima and is generally associated with coherence term of the interference between the reference and collected beams. The phase modulator **134** may generally operate at a selected frequency, shifting frequency of the collected interfering signal. The collected beam is further split by collection beam splitter **BS3** to first and second collected light portions **S1** and **S2** being first and second signal beams. As described above, the present technique utilizes interference between the first and second portions of collected light **S1** and **S2** and the respective first and second reference beams **R1** and **R2.** To this end, the reference and collected beams are coupled in respective beam combiners **BC** and directed to respective first and second detectors **144** and **142.** In this example, the system utilizes balanced detectors, for example, the balanced detectors may be configured for pair of photodetectors connected together to provide balanced detection scheme, e.g., connected to cancel DC terms and common noise, providing improved signal to noise ratio. As indicated above, phase modulator **134** may be positioned in path of output interrogating beam, collected beam, or paths of reference beams.

Detection data, from the first and second detectors **144** and **142** is transmitted to control circuit **500.** In this example, the control circuit include an analog signal processor **ASP,** analog to digital converter **A/D** and one or more processors **CPU.** As indicated above, the control circuit **500** may also include memory unit, and at least one of user interface or communication port.

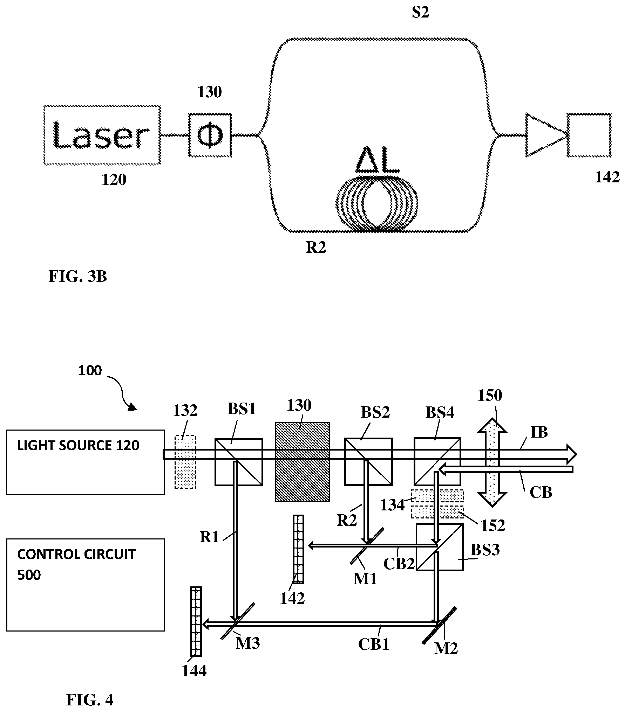

Configuration and signal path of system **100** provides effective first and second interferometer loops. A first interferometer loop is formed by first reference beam **R1**, interrogating beam and first signal beam **S1**. In this loop, on the interrogating part passes through first noise generator **130,** while the reference beam **R1** is not affected by the noise generator. The secund interferometer beam is formed by second reference beam **R2,** interrogating beam and second signal beam **S2**. In the secund interferometer loop, both the reference and interrogating beams are affected by first noise generator **130.** The main difference between the first and second interferometer loops is the location of the first noise generator **130.** These interferometer loops are schematically exemplified in **Fig. 3A and 3B.** In **Fig. 3A** noise is applied only on the interrogating part of the beam, while the reference beam is unaffected. This shifts the relative phase between the two beams. However, as the present technique utilizes contrast of interference, the coherence term is not affected by the phase change in this interferometer. In the example of **Fig. 3B,** noise is applied before split to interrogating and reference beams. The noise pattern thus reduces coherence of the beam as the optical path length of the reference beam and the interrogating beam become larger.

Accordingly, the present technique utilizes variation of coherence length between beams propagating in at least first and second interferometer loops to determine a range to one or more target objects. The present technique thus need not any variation in delay lines, or in path/length, or in wavelength of the interferometer loops. This enables simplified range detector system construction, which for example may be formed as photonic chip/circuit having relatively simple hardware requirements and form factor.

Further, the present technique provides time agnostic measurement as compared to conventional techniques that utilize time of flight or Frequency Modulated Continuous Wave measurement techniques. The present technique utilizes coherence length and decreasing of coherence between beam portions with respect to path variation of the beam portions. This enables the system of the present technique to utilize simple and robust constructions, that does not require expensive and fast detection sensors as typically required in TOF and FMCW techniques.

The present technique may be operable with selected coherence lengths $lc1$ and $lc2$, thus enabling selectively tunable dynamic range. Selected noise patterns may be pre-stored in the control circuit for operating of noise generators **130** and **132** for selectively tunning/reducing coherence length of beam propagating in the first and/or second interferometer loops. Utilizing variation in coherence length, by proper selection of noise patterns enables selective variation in dynamic range. More specifically, when measuring relatively large range, the coherence length may be selected to be relatively longer as compared to smaller ranges.

As indicated above, the present technique may utilize scanner **160** for determining range of a plurality of points within a scene. Additionally, as indicated above, the present technique enables determining range for various positions in a scene, typically in accordance with geometrical resolution of image collection. This is exemplified in **Fig. 4** illustrating system **100** for obtaining range data from a field of view according to some embodiments of the present technique. As shown, system **100** includes a light source unit **120,** configured to provide EM radiation (e.g., visible light, IR, microwave, UV, etc.) having selected bandwidth and coherence length. Typically, light source unit **120** may utilize one or more laser units. In such configurations, the system may include initial noise generator **132** (e.g., phase modulator) positioned in path of emitted beam and configured to apply selected noise pattern to emitted beam to thereby selectively reduce/control and stabilize coherence length thereof.

The emitted radiation is split, e.g., using first beam splitter **BS1,** to direct a selected portion of the beam to first reference beam **R1**, downstream of the splitting, the beam is passed through a first noise generator **130** (e.g., phase modulator) configured to apply selected noise or phase modulation pattern on the beam. Further, downstream of the noise generator **130**, a second reference beam **R2** is split, e.g., using beam splitter **BS2**. An interrogating beam **IB** is directed, generally using optical arrangement **150,** toward a scene to provide field illumination of a selected field of view. Optical arrangement **150** generally includes one or more lenses, apertures, or other optical elements for directing emitted beam to illuminate a selected field of view and may also be used for collecting light **CB** reflected from the field of view.

Light returning from the field of view is collected using optical arrangement **150** or using parallel optical arrangement that is not specifically shown here. The collected light **CB** is diverted to collection path using beam deflector or beam splitter or polarizing beam splitter **BS4**. The collected light may be filtered by wavelength or polarization or both filter **152** and may be transmitted through phase modulator **134** configured to apply shift to beating frequency of the interfering signal. In some configurations, the phase modulator may vary phase of the beam within a selected range (e.g., between $0$-$2\pi$) at a selected frequency to enable direct detection of coherence level of the interfering signals. The collected beam **CB** is further split, e.g., by beam splitter **BS3,** to first and second signal beams **CB1** and **CB2,** directed to mix/interfere with respective first and second reference beams **R1** and **R2**. In this example, the signal beams **CB1** and **CB2** are directed using mirror **M1**, **M2,** and **M3** to selected path and to interfere with the reference beams. Accordingly, mirrors **M1** and **M3** are generally partly reflective and partly transmissive. It should be noted that combining the reference and collected beams may be done in various techniques as known in the art. Accordingly mirrors **M1** and **M3** may be replaced by other configurations of the optical system. The interfered signals, associated with first signal beam **CB1** and first reference beam **R1**, and associated with second signal beam **CB2** and second reference beam **R2,** are directed respectively to first and second detector arrays **144** and **142**. The detector arrays **144** and **142** are positioned in image plane with respect to the scene using optical arrangement **150.** It should be noted that system **100** may include one or more additional optical elements that are not specifically shown here, positioned to relay image plane to selected location of the detector arrays **144** and **142,** and to apply selected optical power on reference beams **R1** and **R2** to provide interference data for selected plurality of pixels, preferably covering the field of view of system **100.** It should also be noted that detector arrays **144** and **142** may be formed as balanced detector arrays.

Detector arrays **144** and **142,** may be two dimensional arrays providing image representation of the field of view. Alternatively, detector arrays **144** and **142** may be one-dimensional 1D array. In such configurations, the system may be configured to provide line range data indicative of range of objects within a one-dimensional line. This 1D configuration may also include a scanner unit (exemplified as scanner **160** in **Fig. 2)** configured to provide scanning in perpendicular axis with respect to the 1D detector arrays, thereby providing actual 2D image data in hybrid form between detector array and scanning of the field of view.

Detector arrays **144** and **142** are configured to transmit data on detected optical coherence level maps to the control circuit **500.** As indicated above, control circuit **500** may include one or more processors and memory unit, configured for determining range to objects for at least one, at least a selected group, or preferably each pixel of the detector arrays **144** and **142,** in accordance with relation between detected intensity in the respective detector cells. The control circuit may utilize pre-store data (e.g., calibration data) indicative of coherence variation parameter K. Specifically, the pre-stored data may include data on coherence lengths *lc1* and *lc2*, intensity variations between reference beams and signal beams, and selected noise patterns applied by the noise generators **130** and **132.**

The control circuit **500,** is thus configured and operable for processing image coherence level map generated by the first and second detector arrays **144** and **142,** and determine accordingly data on range map, indicative of range to selected one or more positioned within the field of view. The control circuit is thus configured to provide output data indicative of range map to an operator, transmit the range map using communication module to a remote system or store it in a memory unit thereof. Thus, the present technique, utilizing scanning arrangement as exemplified in **Fig. 2,** or field illumination exemplified in **Fig. 4,** enables generating three-dimensional (3D) map of a selected field of view. Such 3D map provides an image (generally monochromatic) of the field of view including data on range to the different elements in the field of view.

The present technique may operate using various wave signals including electromagnetic radiation and acoustic waves. In the case of electromagnetic radiation, the present technique may utilize optical radiation, or IR radiation. Additionally, the present technique may operate in microwave and RF radiation frequencies, where mixing of the reference and collected beams can be performed electronically after collection of the respective beams using corresponding antenna elements. Further, in microwave and/or RF frequencies, the present technique may utilize phase array antenna units, enabling steering of emitted beams and determining collection beams to provide spatial separation between different regions of a field of view.

The range detection system of the present technique as described above may be implemented as on chip system utilizing selected waveguides (e.g., Silicon, SiN, InP, or any other Photonics Integrated Circuits technology selected in accordance with wavelength of beam used). The system may also be implemented in fiber-based system as generally exemplified in **Fig. 2** and/or using free-space propagation as exemplified in **Figs. 1 and 4.** Further, the range detection system may utilize a combination of one or more of photonic circuit, optical fibers and/or free-space propagation.

It should also be noted that the present technique is described herein above using first and second interferometer loops, or first and second reference beams. However, it should be understood that the selected number of interferometer loops or reference beams may be increased, using an arrangement of three, four or more interferometer arrangements, associated with corresponding different coherence lengths. This may be used to provide additional measurement data and enable increase of signal to noise ratio and robustness of range detection. Further, it should be understood that the different interferometer loops may utilize two or more different wavelength ranges, thereby also utilizing two or more separate interrogating beams.

Thus, the present technique provides for range detection relating to distance to one or more target objects in the field. The present technique utilizes coherence length variation and interference between interrogating and reference beams for determining time-agnostic data indicative of distance to one or more target objects as described above.

## Claims

1. An optical system (100) comprising one or more light sources (120) providing coherent illumination (OB) of a selected wavelength range, an optical arrangement, a detection unit, and a control circuit;

    said optical arrangement comprises optical elements forming at least first and second interferometer loops, each comprising a reference arm and an interrogating arm, said at least first and second interferometer loops being associated with corresponding at least first and second detectors (142, 144) of the detection unit; light propagating in said interrogating arm is directed at a target object (R) via an output optical element and a reflection of light (BC) from said target object (R) is collected by an input optical element;
    said detection unit comprises at least first and second detectors (142, 144) configured for detection of interfering signals of the respective one of the first and second interferometer loops, said detection unit is configured to determine data indicative of a relation between signals detected by the at least first and second detectors (142, 144);
    said control circuit (500) is configured and operable to receive detected signals from said detection unit, determine a relation $\Gamma$ (Gamma) between mutual coherence factors detected by said detection unit for said at least first and second interferometer loops, said relation $\Gamma$ (Gamma) being indicative of a range to said target object, utilize data on effective coherence length for said at least first and second interferometer loops and determine accordingly a range to said target object; wherein, one of said first and second interferometer loops comprises a first noise generator (130) positioned and configured to apply selected noise or phase modulation pattern to affect light propagating in both of the corresponding reference and interrogating arms, thereby affecting coherence length of light in said interferometer loops.

2. The system of claim 1, wherein said interrogating arm is common between said first and second interferometer loops, and wherein said first noise generator (130) is positioned to affect light propagating in said interrogating arm of the one interferometer loop and in both interrogating and reference arm of the other interferometer loop, thereby affecting coherence relation between the reference and interrogating arms of the other interferometer loop.

3. The system of claim 2, further comprising an additional noise generator positioned in path of beam in said other interferometer loop, said additional noise generator is configured to apply noise correlated with noise of said first noise generator.

4. The system of any one of claims 1 to 3, wherein said at least first and second detectors (142, 144) are balanced detectors with respect to output of the first and second interferometer loops.

5. The system of any one of claims 1 to 4, wherein said at least first and second detectors (142, 144) are Root Mean Square (RMS) detectors configured for generating output signal indicative of power of the interfering signals within a selected frequency range.

6. The system of any one of claims 1 to 2, wherein said first and second detectors (142, 144) are configured for generating corresponding detection sequences at selected sampling frequencies, a ratio between amplitude at peak signal frequency being indicative of a distance to said target object.

7. The system of any one of claim 1 to 6, wherein said light source unit (120) comprises a coherent light source and a second noise generator (132), said second noise generator (132) is configured to affect coherence length of output light from said coherent light source (120).

8. The system of any one of claims 1 to 7, further comprising at least one phase modulator (134) positioned in paths of beam directed toward reference arms of said first and second interferometer loops, for modulating phase of the respective reference beams at selected modulation frequencies, thereby shifting beating frequencies of the collected interfering signals.

9. The system of any one of claims 1 to 8, wherein said control circuit (500) is configured for analyzing variation frequency of the detected signals from said detection unit (142, 144), said analyzing comprising determining peak frequency of variation of the detected signals and power of peak frequency components, a relation between power of peak frequency components of signal of the at least first and second interferometer loops being indicative of range to said target object.

10. The system of any one of claims 1 to 9, wherein said detection unit (142, 144) comprises at least first and second detector arrays (142, 144), said optical arrangement comprises imaging optical arrangement (150) for generating an interference of image of said target object (R) and respective first and second reference beams onto said first and second detector arrays, to thereby generate interference data of said image on the corresponding one of the first and second first and second detector arrays (142, 144) respectively, thereby enabling range detection of a selected field of view.

11. The system of any one of claims 1 to 10, further comprising a scanning unit (160) configured for varying direction of said interrogating beam (IB), thereby enabling scanning of a field comprising said target object.

12. The system of any one of claims 1 to 11, wherein said optical arrangement comprises at least one of: optical fiber section, free space propagation section, or system on a chip portion.

13. The system of any one of claims 1 to 13, further comprising a coherence length/linewidth measurement unit positioned at output of said one or more light sources (120), said coherence length measurement unit is configured to periodically or continuously determine coherence level of emitted beam, to thereby generate data oh initial coherence length of emitted beam for calibration of range detection by the system.

14. A method for use in determining range to a target object, the method comprising:

    a. providing electromagnetic (EM) beam of certain coherence length;
    b. directing at least first and second portions of the EM beam toward first and second reference arms
    c. directing at least a third portion of the EM beam toward said target object;
    d. collecting reflected radiation comprising EM beam components reflected from said target object, and directing first and second portions of the reflected radiation to interfere with EM beams of said first and second reference arms, and determining first and second interference intensities associated with interference of said first and second portions of reflected light with light of said first and second reference arms respectively; and
    e. processing data on said first and second interference intensities and data on coherence lengths of light portions in said first and second reference arms and utilizing a relative difference in the coherence lengths or levels to determine range to said target object;

wherein the method comprising applying selected noise affecting relative coherence between at least one of said first and second portions of illumination and said third portion of the EM beam.

15. The method of claim 14, wherein said processing comprises determining constant and mutual coherence portions of said first and second interference intensities and determining a ratio between mutual coherence factor of said first and second interference intensities.

**Patentansprüche**

1. Optisches System (100), das eine oder mehrere Lichtquellen (120), die eine kohärente Beleuchtung (OB) eines ausgewählten Wellenlängenbereichs bereitstellen, eine optische Anordnung, eine Detektionseinheit und eine Steuerschaltung umfasst;

   wobei die optische Anordnung optische Elemente umfasst, die mindestens erste und zweite Interferometerschleifen bilden, wobei jede einen Referenzarm und einen Messarm umfasst, wobei die zumindest ersten und zweiten Interferometerschleifen mit entsprechenden zumindest ersten und zweiten Detektoren (142, 144) der Detektionseinheit verknüpft sind; wobei Licht, das sich in dem Messarm ausbreitet, über ein optisches Ausgangselement auf ein Zielobjekt (R) gerichtet wird und eine Lichtreflexion (BC) von dem Zielobjekt (R) durch ein optisches Eingangselement gesammelt wird;

   wobei die Detektionseinheit mindestens erste und zweite Detektoren (142, 144) umfasst, die für die Detektion von Interferenzsignalen der jeweiligen einen der ersten und zweiten Interferometerschleifen konfiguriert sind, wobei die Detektionseinheit dazu konfiguriert ist, Daten zu bestimmen, die auf eine Beziehung zwischen Signalen hinweisen, die von den zumindest ersten und zweiten Detektoren (142, 144) detektiert werden;

   wobei die Steuerschaltung (500) dazu konfiguriert und betriebsfähig ist, detektierte Signale von der Detektionseinheit zu empfangen, eine Beziehung Γ (gamma) zwischen gegenseitigen Kohärenzfaktoren zu bestimmen, die von der Detektionseinheit für die mindestens ersten und zweiten Interferometerschleifen detektiert werden, wobei die Beziehung Γ (gamma) auf eine Entfernung zu dem Zielobjekt hinweist, Daten zu der effektiven Kohärenzlänge für die mindestens

   ersten und zweiten Interferometerschleifen nutzt und dementsprechend eine Entfernung zu dem Zielobjekt bestimmt;

   wobei eine der ersten und zweiten Interferometerschleifen einen ersten Rauschgenerator (130) umfasst, der dazu positioniert und konfiguriert ist, ein ausgewähltes Rauschen- oder Phasenmodulationsmuster anzuwenden, um Licht zu beeinflussen, das sich sowohl in den entsprechenden Referenz- als auch Messarmen ausbreitet, wodurch die Kohärenzlänge des Lichts in den Interferometerschleifen beeinflusst wird.

2. System nach Anspruch 1, wobei der Messarm zwischen den ersten und zweiten Interferometerschleifen gemeinsam ist, und wobei der erste Rauschgenerator (130) so positioniert ist, dass er Licht beeinflusst, das sich in dem Messarm der einen Interferometerschleife und in sowohl dem Messarm als auch dem Referenzarm der anderen Interferometerschleife ausbreitet, wodurch die Kohärenzbeziehung zwischen den Referenz- und Messarmen der anderen Interferometerschleife beeinflusst wird.

3. System nach Anspruch 2, das ferner einen zusätzlichen Rauschgenerator umfasst, der in einem Strahlengang in der anderen Interferometerschleife positioniert ist, wobei der zusätzliche Rauschgenerator dazu konfiguriert ist, Rauschen anzuwenden, das mit Rauschen des ersten Rauschgenerators korreliert.

4. System nach einem der Ansprüche 1 bis 3, wobei die mindestens ersten und zweiten Detektoren (142, 144) Balanced-Detektoren hinsichtlich der Ausgänge der ersten und zweiten Interferometerschleifen sind.

5. System nach einem der Ansprüche 1 bis 4, wobei die mindestens ersten und zweiten Detektoren (142, 144) Effektivwertdetektoren (RMS-Detektoren) sind, die für die Erzeugung eines Ausgangssignals konfiguriert sind, das die Leistung der Interferenzsignale innerhalb eines ausgewählten Frequenzbereichs anzeigt.

6. System nach einem der Ansprüche 1 bis 2, wobei der erste und der zweite Detektor (142, 144) dazu konfiguriert sind, entsprechende Detektionssequenzen bei ausgewählten Abtastfrequenzen zu erzeugen, wobei ein Verhältnis zwischen Amplitude bei Spitzensignalfrequenz auf einen Abstand zum Zielobjekt hinweist.

7. System nach einem der Ansprüche 1 bis 6, wobei die Lichtquelleneinheit (120) eine kohärente Lichtquelle und einen zweiten Rauschgenerator (132) umfasst, wobei der zweite Rauschgenerator (132) dazu konfiguriert ist, eine Kohärenzlänge des Ausgangslichts von der kohärenten Lichtquelle (120) zu beeinflussen.

8. System nach einem der Ansprüche 1 bis 7, das ferner mindestens einen Phasenmodulator (134) umfasst, der in Strahlengängen positioniert ist, die hin zu Referenzarmen der ersten und zweiten Interferometerschleifen gerichtet sind, um die Phase der jeweiligen Referenzstrahlen bei ausgewählten Modulationsfrequenzen zu modulieren, wodurch die Schwebungsfrequenzen der gesammelten Interferenzsignale verschoben werden.

9. System nach einem der Ansprüche 1 bis 8, wobei die Steuerschaltung (500) dazu konfiguriert ist, eine Variationsfrequenz der detektierten Signale von der Detektionseinheit (142, 144) zu analysieren, wobei das Analysieren das Bestimmen einer Spitzenvariationsfrequenz der detektierten Signale und einer Leistung von Spitzenfrequenzkomponenten umfasst, wobei ein Verhältnis zwischen der Leistung von Spitzenfrequenzkomponenten eines Signals der zumindest ersten und zweiten Interferometerschleifen auf die Entfernung zum Zielobjekt hinweist.

10. System nach einem der Ansprüche 1 bis 9, wobei die Detektionseinheit (142, 144) mindestens erste und zweite Detektorarrays (142, 144) umfasst, wobei die optische Anordnung eine bildgebende optische Anordnung (150) zum Erzeugen einer Interferenz des Bildes des Zielobjekts (R) und der jeweiligen ersten und zweiten Referenzstrahlen auf die ersten und zweiten Detektorarrays umfasst, um dadurch Interferenzdaten des Bildes auf dem entsprechenden einen der ersten und zweiten ersten und zweiten Detektorarrays (142, 144) zu generieren, wodurch eine Entfernungserkennung eines ausgewählten Sichtfelds ermöglicht wird.

11. System nach einem der Ansprüche 1 bis 10, ferner umfassend eine Abtasteinheit (160), die dazu konfiguriert ist, eine Richtung des Messtrahls (1B) zu variieren, wodurch das Abtasten eines Feldes ermöglicht wird, das das Zielobjekt umfasst.

12. System nach einem der Ansprüche 1 bis 11, wobei die optische Anordnung mindestens eines umfasst aus: Lichtwellenleiterabschnitt, Freiraumausbreitungsabschnitt oder einem System-auf-einem-Chip-Teilabschnitt.

13. System nach einem der Ansprüche 1 bis 13, das ferner eine Kohärenzlängen-/Linienbreitenmesseinheit umfasst, die an einem Ausgang der einen oder mehreren Lichtquellen (120) positioniert ist, wobei die Kohärenzlängenmesseinheit dazu konfiguriert ist, periodisch oder kontinuierlich den Kohärenzgrad eines emittierten Strahls zu bestimmen, um dadurch Daten zu einer anfänglichen Kohärenzlänge des emittierten Strahls zur Kalibrierung der Entfernungsdetektion durch das System zu generieren.

14. Verfahren zur Verwendung bei der Bestimmung einer Entfernung zu einem Zielobjekt, wobei das Verfahren umfasst:

a. Bereitstellen eines elektromagnetischen (EM) Strahls mit einer spezifischen Kohärenzlänge;
b. Richten von mindestens ersten und zweiten Teilabschnitten des EM-Strahls hin zu ersten und zweiten Referenzarmen
c. Richten mindestens eines dritten Teilabschnitts des EM-Strahls hin zu dem Zielobjekt;
d. Sammeln reflektierter Strahlung, die EM-Strahlkomponenten umfasst, die von dem Zielobjekt reflektiert werden, und Ausrichten von ersten und zweiten Teilabschnitten der reflektierten Strahlung, um EM-Strahlen der ersten und zweiten Referenzarme zu stören, und Bestimmen von ersten und zweiten Interferenzintensitäten, die mit der Interferenz der ersten und zweiten Teilabschnitte des reflektierten Lichts verknüpft sind, mit Licht der ersten bzw. zweiten Referenzarme; und
e. Verarbeiten von Daten über die ersten und zweiten Interferenzintensitäten und Daten über Kohärenzlängen von Lichtteilabschnitten in den ersten und zweiten Referenzarmen und Verwenden einer relativen Differenz der Kohärenzlängen oder - grade zur Bestimmung der Entfernung zum Zielobjekt;

wobei das Verfahren das Anwenden von ausgewähltem Rauschen umfasst, das die relative Kohärenz zwischen mindestens einem der ersten und zweiten Beleuchtungsteilabschnitte und dem dritten Teilabschnitt des EM-Strahls beeinflusst.

15. Verfahren nach Anspruch 14, wobei das Verarbeiten das Bestimmen konstanter und gegenseitiger Kohärenzteilabschnitte der ersten und zweiten Interferenzintensitäten und das Bestimmen eines Verhältnisses zwischen einem gegenseitigen Kohärenzfaktor der ersten und zweiten Interferenzintensitäten umfasst.

**Revendications**

1. Système optique (100) comprenant une ou plusieurs sources lumineuses (120) fournissant un éclairage cohérent (OB) d'une plage de longueurs d'onde sélectionnée, un agencement optique, une unité de détection et un circuit de commande ;

   ledit agencement optique comprend des éléments optiques formant au moins des première et seconde boucles d'interféromètre, chacune comprenant un bras de référence et un bras d'interrogation, lesdites au moins première et seconde boucles d'interféromètre étant associées à au moins des premier et second détecteurs (142, 144) correspondant de l'unité de détection ; la lumière se propageant dans ledit bras d'interrogation est dirigée vers un objet cible (R) via un élément optique de sortie et une réflexion de lumière (BC) provenant dudit objet cible (R) est collectée par un élément optique d'entrée ;
   ladite unité de détection comprend au moins des premier et second détecteurs (142, 144) configurés pour la détection de signaux interférents de la boucle respective des première et seconde boucles d'interféromètre, ladite unité de détection est configurée pour déterminer des données indicatives d'une relation entre les signaux détectés par les au moins premier et second détecteurs (142, 144) ;
   ledit circuit de commande (500) est configuré et utilisable pour recevoir des signaux détectés provenant de ladite unité de détection, déterminer une relation Γ (Gamma) entre les facteurs de cohérence mutuelle détectés par ladite unité de détection pour au moins lesdites première et seconde boucles d'interféromètre, ladite relation Γ (Gamma) étant indicative d'une distance par rapport audit objet cible, utiliser des données sur la longueur de cohérence effective pour lesdites au moins première et seconde boucles d'interféromètre et déterminer en conséquence une distance par rapport audit objet cible ; dans lequel, l'une desdites première et seconde boucles d'interféromètre comprend un premier générateur de bruit (130) positionné et configuré pour appliquer un motif de modulation de bruit ou de phase sélectionné pour affecter la lumière se propageant dans les bras de référence et d'interrogation correspondants, affectant ainsi la longueur de cohérence de la lumière dans lesdites boucles d'interféromètre.

2. Système selon la revendication 1, dans lequel ledit bras d'interrogation est commun entre lesdites première et seconde boucles d'interféromètre, et dans lequel ledit premier générateur de bruit (130) est positionné pour affecter la lumière se propageant dans ledit bras d'interrogation de la première boucle d'interféromètre et dans les bras d'interrogation et de référence de l'autre boucle d'interféromètre, affectant ainsi la relation de cohérence entre les bras de référence et d'interrogation de l'autre boucle d'interféromètre.

3. Système selon la revendication 2, comprenant en outre un générateur de bruit supplémentaire positionné sur le trajet du faisceau dans ladite autre boucle d'interféromètre, ledit générateur de bruit supplémentaire étant configuré pour appliquer un bruit corrélé au bruit dudit premier générateur de bruit.

4. Système selon l'une quelconque des revendications 1 à 3, dans lequel lesdits au moins premier et second détecteurs (142, 144) sont des détecteurs équilibrés par rapport à la sortie des première et seconde boucles d'interféromètre.

5. Système selon l'une quelconque des revendications 1 à 4, dans lequel lesdits au moins premier et second détecteurs (142, 144) sont des détecteurs de valeur efficace (RMS) configurés pour générer un signal de sortie indicatif de la puissance des signaux interférents dans une plage de fréquences sélectionnée.

6. Système selon l'une quelconque des revendications 1 à 2, dans lequel lesdits premier et second détecteurs (142, 144) sont configurés pour générer des séquences de détection correspondantes à des fréquences d'échantillonnage sélectionnées, un rapport entre l'amplitude à la fréquence de signal de crête indiquant une distance par rapport audit objet cible.

7. Système selon l'une quelconque des revendications 1 à 6, dans lequel ladite unité de source lumineuse (120) comprend une source de lumière cohérente et un second générateur de bruit (132), ledit second générateur de bruit (132) étant configuré pour affecter la longueur de cohérence de la lumière de sortie de ladite source de lumière cohérente (120).

8. Système selon l'une quelconque des revendications 1 à 7, comprenant en outre au moins un modulateur de phase (134) positionné sur les trajets des faisceaux dirigés vers les bras de référence desdites première et seconde boucles d'interféromètre, pour moduler la phase des faisceaux de référence respectifs à des fréquences de modulation sélectionnées, décalant ainsi les fréquences de battement des signaux interférents collectés.

9. Système selon l'une quelconque des revendications 1 à 8, dans lequel ledit circuit de commande (500) est configuré pour analyser la fréquence de variation des signaux détectés provenant de ladite unité de détection (142, 144), ladite analyse comprenant la détermination de la fréquence de crête de variation des signaux détectés et de la puissance des composantes de fréquence de crête, une relation entre la puissance des composantes de fréquence de crête du signal des au moins première et seconde boucles d'interféromètre indiquant la distance audit objet cible.

10. Système selon l'une quelconque des revendications 1 à 9, dans lequel ladite unité de détection (142, 144) comprend au moins des premier et second réseaux de détecteurs (142, 144), ledit système optique comprenant un système optique d'imagerie (150) pour générer une interférence de l'image dudit objet cible (R) et des premier et second faisceaux de référence respectifs sur lesdits premier et second réseaux de détecteurs, afin de générer ainsi des données d'interférence de ladite image sur le réseau correspondant des premier et second réseaux de détecteurs (142, 144), permettant ainsi la détection de distance d'un champ de vision sélectionné.

11. Système selon l'une quelconque des revendications 1 à 10, comprenant en outre une unité de balayage (160) configurée pour faire varier la direction dudit faisceau d'interrogation (IB), permettant ainsi le balayage d'un champ comprenant ledit objet cible.

12. Système selon l'une quelconque des revendications 1 à 11, dans lequel ledit agencement optique comprend au moins l'un des éléments suivants : une section de fibre optique, une section de propagation en espace libre ou un système sur une partie de puce.

13. Système selon l'une quelconque des revendications 1 à 13, comprenant en outre une unité de mesure de longueur de cohérence/largeur de ligne positionnée à la sortie desdites une ou plusieurs sources lumineuses (120), ladite unité de mesure de longueur de cohérence étant configurée pour déterminer périodiquement ou en continu le niveau de cohérence du faisceau émis, afin de générer ainsi des données sur la longueur de cohérence initiale du faisceau émis pour l'étalonnage de la détection de distance par le système.

14. Procédé destiné à déterminer la distance d'un objet cible, le procédé comprenant :

a. la fourniture d'un faisceau électromagnétique (EM) d'une certaine longueur de cohérence ;
b. la direction des au moins première et seconde parties du faisceau électromagnétique vers les premier et second bras de référence
c. la direction d'au moins une troisième partie du faisceau EM vers ledit objet cible ;
d. la collecte du rayonnement réfléchi comprenant les composantes du faisceau électromagnétique réfléchi par ledit objet cible, et la direction des première et seconde parties du rayonnement réfléchi pour interférer avec les faisceaux électromagnétiques desdits premier et second bras de référence, et déterminer les première et seconde intensités d'interférence associées à l'interférence desdites première et seconde parties de lumière réfléchie avec la lumière desdits premier et second bras de référence respectivement ; et
e. le traitement de données sur lesdites première et seconde intensités d'interférence et de données sur les longueurs de cohérence des parties lumineuses dans lesdits premier et second bras de référence et l'utilisation d'une différence relative dans les longueurs ou niveaux de cohérence pour déterminer la distance audit objet cible ;

dans lequel le procédé comprend l'application d'un bruit sélectionné affectant la cohérence relative entre au moins l'une desdites première et seconde parties d'éclairage et ladite troisième partie du faisceau EM.

15. Procédé selon la revendication 14, dans lequel ledit traitement comprend la détermination de parties de cohérence constante et mutuelle desdites première et seconde intensités d'interférence et la détermination d'un rapport entre le facteur de cohérence mutuelle desdites première et seconde intensités d'interférence.

**FIG. 1**

**FIG. 2**

**FIG. 3A**

**FIG. 3B**

**FIG. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020359903 A
- WO 2001042735 A

- US 2021033380 A

**Non-patent literature cited in the description**

- **FISCHER et al.** Overcoming coherence length limitation in two wavelength interferometry - an experimental verification. *Optics Communications*, 01 February 1996, vol. 123 (4), 465-472